# EUROPÄISCHE PATENTANMELDUNG

(11) **EP 0 935 077 A1**
(43) Veröffentlichungstag der Anmeldung: **11.08.1999**
(21) Anmeldenummer: 98110114.0
(22) Anmeldetag: 03.06.1998
(51) Int. Cl.: F16B 13/06

(54) **Bohrkonsole mit mehrfach geschlitzter Rundhülse**

(30) Priorität: 06.02.1998 DE 29801991 U
(71) Anmelder: WEMEFA HORST CHRISTOPEIT GmbH, D-42555 Velbert (DE)
(72) Erfinder: Kolling, Ulrich, 45239 Essen (DE)
(74) Vertreter: Stratmann, Ernst, Dr.-Ing.

(57) **Zusammenfassung**

Es wird eine Bohrkonsole (10) zur Abstützung von schweren Gegenständen, wie Heizkörper, an einer Wand, beschrieben, bestehend aus einem Spreizdübel (12), der eine mit axialem, über die gesamte Hülsenlänge sich erstreckendem Schlitz (18) versehene Rundhülse (16) und einen in der Rundhülse (16) angeordneten, eine Gewindebohrung (24) und zwei axial zueinander versetzte konische Bereiche (26, 28) aufweisenden Konus (22) umfaßt, einem durch die Rundhülse (16) des Spreizdübels (12) bis zum Gewinde (24) des Konus (22) reichendem Schraubbolzen (20) und einem an dem Vorderende (60) der Rundhülse (16) durch den Schraubbolzen (20) feststellbaren Konsolenkopf (14) zum Abstützen oder Einhängen des Heizkörpers o. dgl., wobei die Rundhülse (16) fern von ihren Enden radiale, nach innen gerichtete Einschnürungen (30) für den Konus (22) aufweist und an ihrem Vorderende (60) vom Konsolenkopf (14) umgriffen ist. Erfindungsgemäß bestehen die Einschnürungen (30) aus mehreren, über dem Rundhülsenumfang (Fig. 8) verteilten, axial sich erstreckenden Eindrückungen und zwischen den Eindrückungen (30) sind weitere, nur über einen Teil der Hülsenlänge sich erstreckende Schlitze (32,34) angeordnet.

## Beschreibung

### TECHNISCHES GEBIET

Die Erfindung betrifft eine Bohrkonsole zur Abstützung von schweren Gegenständen, wie Heizkörper, an einer Wand, bestehend aus einem Spreizdübel, der eine mit axialem, über die gesamte Hülsenlänge sich erstreckenden Schlitz versehene Rundhülse und einen in der Rundhülse angeordneten, eine Gewindebohrung und zwei axial zueinander versetzte konische Bereiche aufweisenden Konus umfaßt, einem durch die Rundhülse des Spreizdübels bis zum Gewinde des Konus reichenden Schraubbolzen und einem an dem Vorderende der Rundhülse durch den Schraubbolzen feststellbaren Konsolenkopf zum Abstützen oder Einhängen des Heizkörpers oder dgl., wobei die Rundhülse fern von ihren Enden radiale, nach innen reichende Einschnürungen für den Konus aufweist und an ihrem Vorderende vom Konsolenkopf umgriffen ist.

### STAND DER TECHNIK

Eine derartige Bohrkonsole ist aus der DE 33 36 168 C2 bereits bekannt. Nachteilig bei der bekannten Bohrkonsole ist zum einen, daß sie aus relativ vielen Einzelteilen besteht, was die Herstellung erschwert und verteuert und was auch problematisch bei der Montage werden kann, zum anderen hat sich gezeigt, daß diese Konsole bei bestimmten Anwendungsbereichen noch nicht ausreichend stabil ist. So ist es vorgekommen, daß der aus Kunststoff bestehende Konus beim Anziehen des in ihn eingeführten Schraubbolzens in die Länge gezogen wird und sogar der vordere, erste Konusbereich von dem (zweiten) hinteren Konusbereich abgerissen wird. Des weiteren hat sich gezeigt, daß bei bestimmten Baumaterialien und Bohrlochformen das Vorderende der Bohrkonsole nicht ausreichend stabil in der Wand gehalten wird. Der Kopf der Bohrkonsole kann sich dann bezüglich der Rundhülse verkanten und so die Tragfähigkeit der Bohrkonsole beeinträchtigen.

Es sind auch Bohrkonsolen bekannt, die aus weniger Teilen aufgebaut sind und bei denen die Stabilität durch eine zusätzliche Wandabstützung erhöht wird. In diesem Zusammenhang sei auf die DE 195 10 781 A1 verwiesen. Allerdings arbeitet diese Konsole mit nur mit einem einfachen Konus, so daß die Spreizwirkung über die Rundhülsenerstreckung weniger gleichmäßig ist und dadurch wiederum bei bestimmten Wandmaterialien Probleme auftreten können. Außerdem führt die zusätzlich vorgesehene Abstützung der Bohrkonsole dazu, daß diese weiter über die Wand vorstehen muß, um so die zusätzliche Abstützung unterbringen zu können.

Bei der Bohrkonsole der beiden vorstehend beschriebenen Entgegenhaltungen ist der aus Kunststoff bestehende Konus mit einer Nase versehen, die sich in einen am Hinterende der Rundhülse angeordneten Schlitz einlegt und dazu dienen soll, ein Mitdrehen des Konus beim Anziehen der Befestigungsschraube zu verhindern.

Ergänzend sei noch auf die DE 39 08 639 A1 verwiesen, aus der eine Bohrkonsole mit einer Hülse bekannt ist, bei welcher Bohrkonsole zur Befestigung eines Heizkörpers an der Wand ein Klemmring mit enger Passung aufgeschoben wird, der sich bei der Montage an der Wand abstützt und beim Spreizen des Vorderendes der Hülse eine axiale Bewegung des Spreizdübels in die Wand hinein verhindert.

### AUFGABE DER ERFINDUNG

Aufgabe der Erfindung ist es, die Bohrkonsole der eingangs genannten Art zu vereinfachen, ohne die vorteilhaften Eigenschaften, insbesondere die möglichst gleichmäßige Spreizung über die gesamte Hülsenlänge zu verlieren. Des weiteren soll möglichst hohe Stabilität erhalten bleiben, auch dann, wenn der Konus aus Kunststoff besteht.

Des weiteren soll die Bohrkonsole so ausgestaltet werden können, daß sie eine zusätzliche Abstützung im Bereich der Austrittsstellung aus der Wand ermöglicht, ohne daß dazu über die Wandebene zusätzlich vorspringende Bauteile vorgesehen werden müssen. Dabei soll die Anordnung so getroffen werden, daß derartige Abstützeinrichtungen nach provisorischer Einführung der Bohrkonsole auch - vor endgültiger Verspannung der Bohrkonsole - wieder mit der Bohrkonsole herausgezogen werden können, um beispielsweise die Bohrkonsole in ihrer Bohrlochtiefe neu zu positionieren.

### LÖSUNGSWEGE DER ERFINDUNG

Dieser Aufgabenkomplex wird zumindest teilweise dadurch erfüllt, daß die Einschnürungen aus mehreren, über dem Rundhülsenumfang verteilten, axial sich erstreckenden Eindrückungen bestehen, und daß zwischen den Eindrückungen weitere, nur über einen Teil der Hülsenlänge sich erstreckende Schlitze angeordnet sind.

Dadurch wird erreicht, daß einerseits nur eine einteilige Rundhülse vorgesehen ist, im Gegensatz zum Stand der Technik, wo zwei Rundhülsenhälften mit Gummiringsicherungseinrichtungen zusammengehalten werden müssen, andererseits gleichwohl eine weitgehend gleichmäßige, sowohl in Hülsenlängserstreckung wie auch über den Umfang erfolgende Spreizung ermöglicht wird. Die Herstellung ist vereinfacht, weil nur ein Blechteil zu stanzen und zu biegen ist, im Gegensatz zum Stand der Technik, wo zwei derartige Teile und Zusatzteile notwendig sind und bei dem Herstellungsprozeß umständlich miteinander kombiniert werden müssen.

Als besonders günstig hat sich erwiesen, wenn drei jeweils um 120° zueinander versetzte Eindrückungen vorhanden sind, wobei jeweils annähernd mittig zwischen den Eindrückungen zum einen der sich über die ganze Hülsenlänge erstreckende Schlitz, zum anderen jeweils einer von zwei weiteren Schlitzen vorgesehen sind, die sich nur über annähernd die axiale Erstreckung der Eindrückungen erstrecken. Dies reicht aus, um ein weitgehend gleichförmiges Auseinanderdrücken des Materials zu ermöglichen.

In die gleiche Richtung ergeben sich Vorteile, wenn gemäß einer noch anderen Weiterbildung der Erfindung der sich über die gesamte Hülsenlänge erstreckende Schlitz nahe dem Hinterende der Hülse sich erweitert.

Bezüglich der Konusform hat es sich, ähnlich wie beim Stand der Technik, als günstig erwiesen, wenn der Konus zwei axial zueinander versetzte Konusflächen ggf. unterschiedlichen maximalen Durchmessers aufweist, wobei die eine, kleineren maximalen Durchmesser aufweisende Konusfläche mit den Einschnürungen zusammenwirkt. Erfindungsgemäß ist nun gemäß einer Weiterbildung der Erfindung nahe dem Hinterende der Hülse ein weiterer Schlitz vorgesehen, der dem über die gesamte Hülsenlänge sich erstreckenden Schlitz gegenüber liegt, aber kürzer als dieser ist, wobei die andere Konusfläche mit den zwischen den Schlitzen gebildeten Halbschalen zusammenwirkt. Auf diese Weise ergeben sich zwei auch auf der Oberfläche jeweils gleichförmig spreizfähige Rundhülsenbereiche.

Um den Nachteil des Langziehens eines aus Kunststoff bestehenden, zwei Konusbereiche aufweisenden Konusbauteils zu vermeiden, hat es sich als günstig erwiesen, wenn gemäß einer noch anderen Weiterbildung der Erfindung der Schraubbolzen bis zum Hülsenende reicht. Auf diese Weise wird das Kunststoffmaterial nur einer Druckkraft ausgesetzt, was insbesondere die bei Kunststoff nachteilige Zugbelastung des Materials reduziert und insbesondere ein Langziehen vermeidet.

Ähnlich wie beim Stand der Technik ist es günstig, wenn der Konus eine in den erweiterten Schlitz oder dem gegenüberliegenden Schlitz aufnehmbare Nase aufweist, die vorzugsweise allerdings nicht nur zur Drehsicherung dient, wie beim Stand der Technik, sondern weitere Aufgaben erfüllen soll. Durch die Unterbringung in dem axial sich erstreckenden Schlitz der Rundhülse ermöglicht sie, die Rundhülse zusammen mit dem Konus auch dann noch aus dem Bohrloch wieder herauszuziehen, wenn der Spannvorgang gerade erst eingesetzt hat.

Zur weiteren Stabilisierung der Rundhülse insbesondere am Vorderende der Bohrkonsole bei problematischen Wandmaterialien hat sich als günstig erwiesen, wenn die Hülse einen, insbesondere konisch ausgebildeten Ring trägt, der das Vorderende der Bohrkonsole in der Wand zusätzlich abstützt. Das ist insbesondere von Vorteil, wenn durch den Bohrvorgang das Bohrloch im Vorderende nahe der Außenfläche der Wand, in der die Bohrkonsole eingebracht werden soll, sich das Bohrloch erweitert. Ein dann vorgesehener zusätzlicher Ring stützt die Bohrkonsole in einem derartig erweiterten Bohrloch besser ab. Damit dieser zusätzliche Ring nicht in der Wand stecken bleibt, wenn die Bohrkonsole nochmals herausgezogen wird, um sie neu zu positionieren, ist es günstig, wenn gemäß einer noch anderen Weiterbildung der Erfindung die von dem Konus getragene Nase über die Hülsenaußenfläche vorspringt. Durch diese Maßnahme wird nämlich erreicht, daß diese Nase beim Herausziehen der Bohrkonsole aus der Wand den Ring und die Hülse zwangsweise mit nach außen nimmt.

Andererseits stört diese Nase den endgültigen Verklemmungsvorgang der Rundhülse im Mauerwerk nicht, weil sie bei einem aus Kunststoff bestehenden Konus während des endgültigen Festziehens abgeschert werden kann, so daß sie nicht mehr störend in Erscheinung tritt.

Bei bestimmten Anwendungsfällen ist es günstig, wenn der Kopf möglichst drehsicher an einer Rundhülse befestigt ist. Zu diesem Zweck ist es gemäß einer Weiterbildung der Erfindung vorgesehen, die Stirnfläche der Rundhülse, die sich in den Kopf erstreckt, mit zumindest einem Zahn zu versehen. Dieser kann sich dann in das Kopfmaterial, sofern dieses aus Kunststoff besteht, eingraben. Besteht der Kopf aus einem härteren Material als Kunststoff, beispielsweise aus Metall, kann gemäß einer noch anderen Weiterbildung der Erfindung die Anlagefläche für die Stirnfläche der Hülse innerhalb des Kopfes mit einer Zahnung versehen sein.

Wie beim Stand der Technik ist es günstig, wenn der Kopf im Bereich, wo er das Ende der Hülse umschließt, einen Sechskantumfang zur Aufnahme eines Maulschlüssels bildet, um auf diese Weise den Kopf mit einem Maulschlüssel drehfest halten zu können, oder in eine bestimmte Richtung drehen zu können. Dies ist dann besonders günstig, wenn sich an den Bereich des Kopfes, der das Hülsenende umschließt, ein exzentrischer Kopfbereich anschließt, der beispielsweise eine schlitzförmige Auflagefläche für die Haltelasche oder dgl. eines Heizkörpers bildet.

### KURZE BESCHREIBUNG DER ERFINDUNG

Die Erfindung wird nachfolgend anhand von Ausführungsbeispielen näher erläutert, die in den Zeichnungen dargestellt sind.

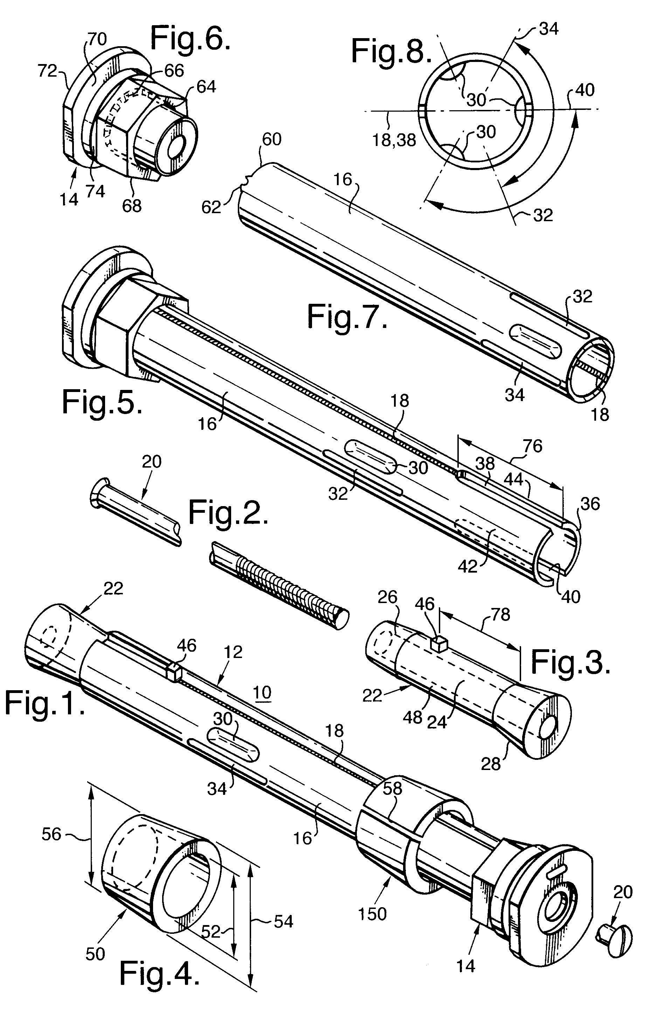

Es zeigt:
**Fig. 1**
   in einer perspektivischen Ansicht eine erfindungsgemäß ausgestaltete Bohrkonsole in ihrer Gesamtheit;
**Fig. 2**
   in einer Detaildarstellung den zugehörigen Spannbolzen;
**Fig. 3**
   in Einzelteildarstellung den in Fig. 1 benutzten Kunststoffkonus;
**Fig. 4**
   den in Fig. 1 benutzten zusätzlichen Ring;
**Fig. 5**
   in einer Ansicht aus entgegengesetzter Richtung Hülse und Kopf der Anordnung gemäß Fig. 1;
**Fig. 6**
   nähere Einzelheiten zu einer Kopfausgestaltung;
**Fig. 7**
   das zum Kopf gerichtete Ende der Hülse mit stirnseitigem doppeltem Zahn; und
**Fig. 8**
   schematisch die Anordnung von Schlitzen und Eindrückungen der Hülse.

### BESTE WEGE DER AUSFÜHRUNG DER ERFINDUNG

In Fig. 1 ist in perspektivischer Ansicht von schräg vorne eine Bohrkonsole 10 zu erkennen, bestehend aus einem Spreizdübel 12, an dessen Vorderende ein Exzenterkopf 14 angeordnet ist. Der Spreizdübel 12 wiederum umfaßt eine Rundhülse 16 mit einem axialen, über die gesamte Hülsenlänge sich erstreckenden Schlitz 18. Durch die Rundhülse 16 erstreckt sich ein Schraubbolzen 20, der in eine Gewindebohrung 24 eines vorzugsweise aus Kunststoff bestehenden Konus 22 eingeschraubt ist, wobei der Konus 22 zwei axial zueinander versetzte konische Bereiche 26, 28 umfaßt.

Entfernt von ihren beiden Enden weist die Rundhülse radial nach innen gerichtete eingepreßte Einschnürungen oder Eindrückungen 30 auf, die mit dem Konus 22, und zwar mit seinem Konusbereich 26 in Eingriff treten können, wenn er durch den Schraubbolzen 20 in die Rundhülse hineingezogen wird. Das Vorderende der Rundhülse 16 wird dabei von einem als Exzenter 14 aufgebauten Konsolenkopf umgriffen, siehe die Fig. 1 und 5. Wie die Figuren erkennen lassen, sind die Einschnürungen aus mehreren, über den Rundhülsenumfang verteilte, axial sich erstreckenden Eindrückungen 30 ausgestaltet, wobei vorzugsweise drei, jeweils um annähernd 120° zueinander versetzte Eindrückungen vorhanden sind, wie die Fig. 8 erkennen läßt. Jeweils annähernd mittig zwischen diesen Eindrückungen 30 sind weitere, nur über einen Teil der Hülsenlänge sich erstreckende weitere Schlitze 32, 34 vorgesehen, so daß letztlich zwischen jeder Eindrückung 30 und der benachbarten Eindrückung 30 ein Schlitzbereich vorgesehen ist, sei es nun der über die gesamte Länge sich erstreckende Schlitz 18, oder ein kürzerer Schlitz 32 bzw. 34. Diese Schlitze 18, 32, 34 ermöglichen es, daß sich das Material um jede Eindrückung 30 herum durch den Konusbereich 26 auseinander drücken läßt, und zwar gleichmäßig über den gesamten Umfang von 360° der Hülse, dies aufgrund der entlang dem Bereich der Eindrückungen 30 sich erstreckenden, axial ausgerichteten Schlitze. Da sich die weiteren Schlitze 32, 34 nur über einen Teil der Hülse erstrecken, entstehen keine Drittelschalen, ähnlich der Halbschalen, wie sie beim Stand der Technik noch vorhanden waren, so daß sich die Hülse nicht in einzelne Teile auflöst, die dann anschließend wieder durch besondere Einrichtungen, wie beim Stand der Technik die Gummiringe, zusammengehalten werden müssen.

Damit ist im Bereich des Konus 26 eine über den Umfang gleichmäßig verteilte Spreizung möglich.

Um auch über die axiale Längserstreckung der Rundhülse eine Spreizung möglichst gleichmäßig zu verwirklichen, ist, ähnlich wie auch beim Stand der Technik, der Konus 22 mit einem zweiten Konusbereich 28 versehen, welcher mit von der hinteren Stirnfläche 36 der Hülse axial nach innen vorspringenden weiteren Schlitzen 38, 40 zusammenwirkt und ermöglicht, die dadurch gebildeten beiden Hülsenhälften 42, 44 auseinanderzudrücken. Der eine Schlitz, 38, kann mit dem über die gesamte axiale Länge der Rundhülse sich erstreckende Schlitz zusammenfallen, ist gegenüber diesem aber vorzugsweise erweitert. Der andere Schlitz 40 wird von einem gegenüberliegenden weiteren Schlitz gebildet, der nur eine begrenzte Länge aufweist und vorzugsweise nicht bis zu dem Bereich der fern von den Enden der Hülse angeordneten Schlitze 32, 34 reicht.

Wie die Fig. 8 erkennen läßt, sind die Schlitze 18, 32, 34 jeweils um 120° zueinander versetzt, sie ergeben daher eine relativ gleichförmige Spreizungsmöglichkeit über dem Umfang der Rundhülse im Bereich des Konusbereiches 26 des Konus 22, während die zweifach vorhandenen Schlitze 38, 40 zueinander 180° Abstand aufweisen und gleichwohl immer noch eine relativ gleichförmige Spreizung am zweiten Konusbereich 28 des Konus 22 erlauben.

Vorteilhaft ist auch, daß sich der Schlitz 40 des Endbereichs der Rundhülse genau zwischen den Schlitzen 32 und 34 des mittleren Bereichs der Rundhülse erstreckt und daher deren Funktion nicht stört.

Wie beim Stand der Technik ist auch hier vorteilhafterweise eine Nase 46 vorgesehen, die vom Konus 22 getragen wird und von dem Schlitz 38 oder 40 aufgenommen werden kann, wenn der Konus in das Hinterende der Rundhülse eingeschoben wird. Diese Nase 46 verhindert einen Mitdrehen des Konus 22, wenn der Schraubbolzen 20 gedreht wird, um die Bohrkonsole zu spannen. Beim Stand der Technik ist die entsprechende Nase im äußeren Konusbereich vorgesehen, während sie bei der erfindungsgemäßen Anordnung auf dem zwischen den beiden Konusbereichen 26, 28 liegenden zylindrischen Bereich 48 des Konus 22 angeordnet ist. Das hat den Vorteil, daß diese Nase über eine längere axiale Schlitzerstreckung wirksam bleibt. Das wiederum hat den Vorteil, daß diese Nase eine weitere Funktion übernehmen kann, nämlich die, die Rundhülse 18 genauer axial in dem Bohrloch zu positionieren, einfach dadurch, daß bei beispielsweise zu tief eingeschobener Rundhülse 18 die Rundhülse 18 auch wieder ein Stück herausgezogen werden kann, bei welchem Vorgang sich die Nase 46 an das innere Ende des Schlitzes 38 bzw. Schlitzes 40 anlegt. Es ist daher nicht so wesentlich, daß der Kopf, der die Rundhülse am Vorderrand umgreift, diesen festhält, vielmehr erfolgt beim Herausziehen des Kopfes das Mitnehmen der Rundhülse 18 indirekt über den Schraubbolzen aufgrund von dessen Verbindung mit dem Konus 22 und über dessen Nase 46.

Es sei noch erwähnt, daß die axiale Länge 76 der beiden Schlitze 38 und 40 und der Abstand 78 der Nase 46 des Konus 22 vom Beginn des Konusbereiches 28 etwa gleich sein können. Durch diese Bemaßung bleibt die Nase 46 so lange unbeschädigt erhalten, bis die Bohrkonsole in einer endgültigen Position fest gespannt wird. In diesem Falle wandert der Konus 22 in die Rundhülse 18 hinein, bei welchem Vorgang dann die Nase 46 durch das Schlitzende der Rundhülse ggf. abgeschert wird. Zu diesem Zeitpunkt ist dies aber nicht mehr von Nachteil.

Der Schraubbolzen 20 ist vorzugsweise so gestaltet, daß er bereits bei Beginn des Spannvorganges bis zum Ende der Rundhülse 18 reicht und daher den Konus 22 nicht nur in seinen ersten konischen Bereich 26 und seinen zylindrischen Bereich 48 erfaßt, sondern auch bis zum zweiten konischen Bereich 28 reicht und so der Konus 22 in seiner gesamten Erstreckung auf Druck belastet wird und ein Langziehen dieses Konus, der ja häufig aus Kunststoff besteht, vermieden wird.

Fig. 4 läßt als weiteres Bauteil einen Kunststoffring 50 erkennen, dessen Innendurchmesser 52 so gestaltet ist, daß er die Hülse 16 im ursprünglichen, nicht expandierten Zustand gleitend aufnehmen kann. Vorzugsweise ist der Außenumfang dieses Ringes 50 konisch ausgestattet, so daß der Außendurchmesser 54 an einem Ende des Ringes 50 etwas größer ist als der Außendurchmesser 56 an seinem anderen Ende. Dieser konische Ring 50 ist gemäß Fig. 1 auf die Rundhülse 16 derart aufgeschoben, das er mit seinem konisch verdicktem Ende in Richtung auf den Kopf 14 liegt. Die in Fig. 1 dargestellte Ringanordnung besitzt einen axialen Schlitz 58, um so das Aufschieben zu erleichtern, falls die Rundhülse etwas vergrößerte Maße aufweist oder leicht expandiert ist.

Zweck dieser Ringanordnung 150 ist, die Bohrkonsole 10 bei solchen Bohrlöchern besser am Vorderende abzustützen, bei denen durch einen unsauberen Bohrvorgang oder durch loses Wandmaterial das vordere Bohrlochende konisch sich erweitert. Der Ring 50 bzw. 150 ergibt eine zusätzliche Abstützung innerhalb des Wandmaterials.

Für den Fall, daß der Ring nicht exakt axial an der Wand positioniert ist, sondern beispielsweise zu tief gekommen ist, könnte es passieren, daß bei nochmaligem Herausziehen der Hülse 16 der Ring nicht mitgenommen wird. Um diese Nachteile zu verhindern, kann gemäß einer weiteren Ausbildung der Erfindung die Nase 46 so ausgestaltet werden, daß sie über die Außenumfangsfläche der Hülse 16 vorspringt und dadurch in der Lage ist, bei Herausziehen der Hülse auch den Ring 150 mitzunehmen und aus der Wand wieder herauszuziehen.

Fig. 7 läßt erkennen, daß von der vorderen Stirnfläche 60 der Hülse 18 ein oder zwei Zähne vorspringen, siehe Bezugszahl 62, die sich in das aus Kunststoff bestehende Kopfmaterial des Kopfes 14 gemäß Fig. 6 einpressen, wenn das Vorderende der Hülse 18 in den passend geformten Rundschlitz 64 aufgenommen wird, und das Hülsenende bis zum Boden 66 dieses Schlitzes 64 vorgeschoben wird. Beim Anziehen der Befestigungsschraube 20 entsteht ein Druck, der die Zähne 62 in das Material des Kopfes im Bereich des Bodens 66 eindringen läßt und dadurch den Kopf drehfest bezüglich der Hülse 18 macht. Das ist von Vorteil, wenn auf die hier exzentrisch ausgestaltete Hülse das Gewicht einer Heizkörperlasche aufgebracht wird, das an sich dazu neigen würde, die Hülse aus ihrer exzentrischen Stellung zu verschieben, falls diese sich nicht in tiefster Lage befindet.

Falls es sich bei dem Material des Kopfes 14 um ein relativ starres Material wie Metall handelt, kann gleichwohl eine drehfeste Verbindung hergestellt werden, falls der Boden 66 der Rundschlitzanordnung 64 gezahnt ausgeführt wird.

Man kann dann vor dem endgültigen Festziehen des Schraubbolzens 20 beispielsweise durch Ansetzen eines Maulschlüssels im Bereich des Sechskantumfanges 68 eine Einstellung des Exzenterkopfes vornehmen, um so die Auflagehöhe des Heizkörpers festzulegen. Dies ist beim Stand der Technik auch im einzelnen beschrieben.

Der Heizkörper könnte beispielsweise dadurch montiert werden, daß eine Heizkörperlasche mit ihrer unteren Kante in dem Schlitz 70 aufgenommen wird, welcher Schlitz von einem vorderen Ring 72 und einem hinteren Ring 74 gebildet sein mag, wie auch beim Stand der Technik beschrieben.

### GEWERBLICHE AUSWERTBARKEIT

Die Erfindung ist im Heizungsbau gewerblich auswertbar.

## Patentansprüche

1. Bohrkonsole (10) zur Abstützung von schweren Gegenständen, wie Heizkörper, an einer Wand, bestehend aus einem Spreizdübel (12), der eine mit axialem, über die gesamte Hülsenlänge sich erstreckendem Schlitz (18) versehene Rundhülse (16) und einen in der Rundhülse (16) angeordneten, eine Gewindebohrung (24) und zwei axial zueinander versetzte konische Bereiche (26, 28) aufweisenden Konus (22) umfaßt, einem durch die Rundhülse (16) des Spreizdübels (12) bis zum Gewinde (28) des Konus (22) reichendem Schraubbolzen (20) und einem an dem Vorderende (60) der Rundhülse (18) durch den Schraubbolzen (20) feststellbaren Konsolenkopf (14) zum Abstützen oder Einhängen des Heizkörpers o. dgl., wobei die Rundhülse (18) fern von ihren Enden radiale, nach innen gerichtete Einschnürungen (30) für den Konus (22) aufweist und an ihrem Vorderende (60) vom Konsolenkopf (14) umgriffen ist, dadurch gekennzeichnet, daß die Einschnürungen (30) aus mehreren, über dem Rundhülsenumfang (Fig. 8) verteilten, axial sich erstreckenden Eindrückungen bestehen, und daß zwischen den Eindrückungen (30) weitere, nur über einen Teil der Hülsenlänge sich erstreckende Schlitze (32) angeordnet sind.

2. Bohrkonsole nach Anspruch 1, dadurch gekennzeichnet, daß drei jeweils um annähernd 120° zueinander versetzte Eindrückungen (30) vorhanden sind, wobei jeweils mittig zwischen den Eindrückungen (30) zum einen der sich über die ganze Hülsenlänge erstreckende Schlitz (18), zum anderen jeweils einer von zwei weiteren Schlitzen (32, 34), die sich nur über annähernd die axiale Erstreckung der Eindrückungen (30) erstrecken, angeordnet sind.

3. Bohrkonsole nach Anspruch 2, dadurch gekennzeichnet, daß der sich über die ganze Hülsenlänge erstreckende Schlitz (18) nahe dem Hinterende (36) der Hülse (16) sich erweitert (38).

4. Bohrkonsole nach Anspruch 2 oder 3, wobei der Konus (22) zwei axial zueinander versetzte Konusbereiche (26, 28) unterschiedlichen maximalen Durchmessers aufweist, wobei die eine, kleineren maximalen Durchmesser aufweisende Konusfläche (26) mit den Einschnürungen (30) zusammenwirkt, dadurch gekennzeichnet, daß nahe dem Hinterende (36) der Hülse (16) ein weiterer Schlitz (40) angeordnet ist, der dem über die ganze Hülsenlänge sich erstreckenden Schlitz (18) gegenüber liegt, aber kürzer als dieser ist, und daß die andere Konusfläche (28) mit dem zwischen den Schlitzen (38, 40) gebildeten Halbschalen (42, 44) zusammenwirkt.

5. Bohrkonsole nach Anspruch 4, dadurch gekennzeichnet, daß sich der Schraubbolzen (20) bis zum Hülsenende (36) erstreckt..

6. Bohrkonsole nach Anspruch 3, 4 oder 5, wobei der Konus (22) eine in den von dem Ende der Hülse (18) gebildeten Schlitz aufnehmbare Nase (26) aufweist, dadurch gekennzeichnet, daß die Nase (46) über die Außenfläche der Hülse (16) vorspringt.

7. Bohrkonsole nach Anspruch 6, dadurch gekennzeichnet, daß sich die Nase auf dem zwischen den beiden konischen Bereichen (26, 28) liegenden zylindrischen Bereich (48) befindet, vorzugsweise in einem Abstand (78) vom Beginn der einen Konusfläche (28), der der Tiefe (76) der vom Hülsenende (36) ausgehenden Schlitze (38, 40) entspricht.

8. Bohrkonsole nach einem der Ansprüche 1 bis 7, dadurch gekennzeichnet, daß die Hülse einen auf ihr aufschiebbaren Ring aus Kunststoff (150) trägt.

9. Bohrkonsole nach Anspruch 8, dadurch gekennzeichnet, daß der Ring geschlitzt ist (58).

10. Bohrkonsole nach Anspruch 8 oder 9, dadurch gekennzeichnet, daß der Ring einen konischen Außenumfang aufweist.

11. Bohrkonsole nach einem der Ansprüche 1 bis 10, dadurch gekennzeichnet, daß von der vorderen Stirnfläche (60) der Hülse (16) zumindest ein Zahn (62) vorspringt, der sich in das Material des das Ende (60) umschließenden Kopfes eingräbt.

12. Bohrkonsole nach Anspruch 11, dadurch gekennzeichnet, daß die Anlagefläche (66) für die Stirnfläche (60) der Hülse (16) innerhalb des Kopfes mit einer Zahnung versehen ist.

13. Bohrkonsole nach einem der Ansprüche 1 bis 12, dadurch gekennzeichnet, daß der Kopf (14) im Bereich, wo er das Ende (60) der Hülse (16) umschließt, einen Sechskantumfang (68) zur Aufnahme eines Maulschlüssels bildet.

14. Bohrkonsole nach Anspruch 13, dadurch gekennzeichnet, daß an dem Bereich des Kopfes, der das Hülsenende umschließt, eine schlitzförmige, vorzugsweise exzentrische Auflagefläche (70) für die Haltelasche oder dgl. eines Heizkörpers oder dgl. gebildet ist.
